(19) Europäisches Patentamt
European Patent Office
Office européen des brevets

(11) **EP 1 503 182 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(51) Int Cl.:
*G01D 5/14* (2006.01)     *B62D 15/02* (2006.01)
*G01D 5/16* (2006.01)

(21) Anmeldenummer: **04015947.7**

(22) Anmeldetag: **07.07.2004**

(54) **Magnetischer Drehwinkelsensor**

Magnetic rotation sensor

Capteur magnétique d'angle de rotation

(84) Benannte Vertragsstaaten:
**DE FR GB**

(30) Priorität: **29.07.2003 DE 10334869**

(43) Veröffentlichungstag der Anmeldung:
**02.02.2005 Patentblatt 2005/05**

(73) Patentinhaber: **Tech3 e.K.**
**85640 Putzbrunn (DE)**

(72) Erfinder: **Kunz-Vizenetz, Thomas**
**85640 Putzbrunn (DE)**

(74) Vertreter: **von Bülow, Tam**
**Patentanwaltskanzlei**
**Rotbuchenstrasse 6**
**81547 München (DE)**

(56) Entgegenhaltungen:
**DE-A- 3 907 442        DE-A- 19 802 381**
**DE-A- 19 908 036**

**Beschreibung**

Die vorliegende Erfindung betrifft einen Drehwinkelsensor gemäß dem Oberbegriff des Patentanspruches 1.

Ein solcher Drehwinkelsensor ist aus der DE 197 47 753 C1 bekannt. Ein Magnetfeldsensor erzeugt dabei ein sinusförmiges und kosinusförmiges elektrisches Ausgangssignal in Abhängigkeit von der relativen Drehstellung zwischen einem an einer sich drehenden Welle angebrachten Magneten und dem Sensor. Ähnliche Drehwinkelsensoren sind auch aus der DE 195 39 134 A1, DE 44 22 868 A1, DE 41 00 666 A1 und DE 43 01 704 A1 bekannt.

Diese Sensoren können jedoch nur einen Winkelbereich von 0° bis 360° erfassen, was für viele Anwendungszwecke nicht ausreichend ist.

Die DE 195 06 938 A1, DE 197 39 823 A1 und DE 199 62 241 A1 schlagen daher zur Erweiterung des Meßbereiches auf mehr als 360° vor, zwei Sensoren über Zahnräder mit der Welle, deren Winkel gemessen werden soll, zu koppeln, wobei die Zahnräder unterschiedliche Zähnezahlen haben. In ähnlicher Weise schlägt auch die EP 0 386 334 B1 unter Verwendung zweier Endlospotentiometer vor, diese über Zahnräder mit unterschiedlicher Zähnezahl mit der Welle zu koppeln. In diesen Fällen ist der mechanische Aufwand der Zahnräder relativ hoch. Auch ergeben sich durch Flankenfehler und ein Spiel der Zahnräder Meßungenauigkeiten.

Die DE 101 40 710 A1 schlägt vor, zwei Sensoren zu verwenden, von denen der eine einen engen ersten Drehwinkelmeßbereich und der zweite einen demgegenüber größeren zweiten Drehwinkelmeßbereich aufweist. Der erste Sensor ist dabei hochgenau und erzeugt ein genaues lineares Ausgangssignal, während der zweite Sensor weniger genau ist und lediglich ein Hilfssignal liefert, das dazu verwendet wird, zu bestimmen, in welcher Periode seines Ausgangssignals der erste Sensor liegt. Zur Meßbereichserweiterung über 360° wird aber auch hier wieder ein Übersetzungsgetriebe benötigt.

Die DE 198 13 569 A1 schlägt vor, an der sich drehenden Welle, deren Winkel gemessen werden soll, eine Schnecke mit wendelförmigen Erhebungen vorzusehen und diesen gegenüberliegend einen Sensor und einen Magneten anzubringen. Bei Drehung der Welle verschiebt sich diese linear entsprechend der Steigung der Schnecke, womit der Sensor, nämlich ein Hall-Element, in Abhängigkeit von der Lage zu den Erhebungen der Schnecke eine unterschiedliche Induktionsstärke mißt. Auch die DE 299 14 310 U1, DE 44 37 939 C2, AT 004 639 U1, DE 39 35 261 A1, JP 11211456 A, JP 61283801 A und DE 37 03 591 C2 setzen im Ergebnis die Drehbewegung der Welle in eine axiale Relativverschiebung zwischen Welle und Sensor um.

Die US 6,411,082 B2 zeigt einen Drehwinkelsensor mit einem magnetfeldempfindlichen Sensor, wie z.B. einem Hall-Element, das ortsfest in einem Gehäuse gelagert ist, und mit einem Permanentmagneten, der relativ zu dem Hall-Element linear verschieblich ist. Der Magnet ist mit einer Gewindestange gekoppelt, die eine Drehbewegung zwischen ihr und dem Gehäuse somit in eine Linearbewegung umsetzt. Entsprechend der Drehstellung verändert sich der axiale Abstand zwischen Magnet und Sensor. Mit bekanntem Steigungsmaß der Gewindestange läßt sich aus dem Ausgangssignal des Sensors ein Maß für den Drehwinkel ermitteln.

Bei den letztgenannten Sensoren sind jedoch das Auflösungsvermögen und damit die Meßgenauigkeit geringer als bei den eingangs genannten Drehwinkelsensoren, die mit sinusund kosinusförmigen Signalen im Meßbereich von 0° bis 360° arbeiten.

Aufgabe der Erfindung ist es, den Drehwinkelsensor der eingangs genannten Art dahingehend zu verbessern, daß er bei hohem Auflösungsvermögen in einem Meßbereich von mehr als 360° und insbesondere mehreren vollen Umdrehungen arbeitet.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, die Welle, deren Drehwinkel gemessen werden soll, bei Drehung um ihre Achse zusätzlich längs einer Führungsbahn axial zu verschieben, so daß sich der Abstand zwischen Magnet und Sensor bei der Drehung entsprechend der Steigung der Führungsbahn verändert. Damit ändert sich die Amplitude der Sensorausgangssignale, woraus man ein Signal gewinnt, aus dem sich mit ausreichender Genauigkeit ermitteln läßt, innerhalb welcher vollen Umdrehung sich die Welle befindet. Aus den sinus- und kosinusförmigen Signalen läßt sich dagegen innerhalb dieser vollen Umdrehung ein Feinsignal für einen Winkel im Bereich von 0° bis 360° ermitteln, das dann zu dem Wert der Anzahl der vollen Umdrehungen mal 360° hinzuaddiert wird.

Die Zwangsführung kann im einfachsten Fall ein Gewinde mit linearer Steigung sein. Der Absolutbetrag der Feldstärke ändert sich dann nach einer quadratischen Funktion ($F(z) = 1/z^2$) . Die Führungsbahn kann aber auch nichtlinear sein und vorzugsweise ebenfalls nach einer quadratischen Funktion verlaufen, womit sich dann die Amplitude gemäß einer linearen Funktion ändert. Wichtig ist lediglich, daß die Führungsbahn nach einer stetigen, monotonen Funktion verläuft.

Man erhält also ein Grobsignal entsprechend dem Abstand in z-Richtung zwischen Magnet und Sensor, das ausreicht, die Umdrehungszahl zu bestimmen und ein Feinsignal aus der Auswertung der sinus- und kosinusförmigen Ausgangssignale. Das Gesamtergebnis hat dann die Genauigkeit des Feinsignales und trotzdem ist der Meßbereich auf eine Vielzahl von Umdrehungen erweitert. Praktische Versuche ergaben, daß Umdrehungszahlen von n = 10 ohne weiteres erreicht werden können.

Die Auswertung des Grobsignales erfolgt vorzugsweise dadurch, daß in einem Speicher eine Vielzahl von Werten von "Stützstellen" hinterlegt werden, die beispielsweise die jeweils maximalen Amplitudenwerte des Sinussignals pro Periode wiedergeben, also z.B. bei 90°, 270° usw. Durch einen iterativen Algorithmus wird dann abgefragt, zwischen welchen zwei Stützstellen das Grobsignal liegt, womit man einen Wert n erhält, der angibt, innerhalb der wievielten Periode des Ausgangssignals bzw. Umdrehung der Welle das Ausgangssignal liegt.

Die Auswertung der Sinus- und Kosinussignale erfolgt im Prinzip über eine Arcustangens-Funktion, die vorzugsweise unter Verwendung des bekannten CORDIC-Algorithmus durchgeführt wird.

Im folgenden wird die Erfindung anhand eines Ausführungsbeispieles im Zusammenhang mit der Zeichnung ausführlicher erläutert. Es zeigt:

Fig. 1     eine Prinzipskizze eines Drehwinkelsensors nach der Erfindung;
Fig. 2     ein Diagramm der sinus- und kosinusförmigen Ausgangssignale der verwendeten Sensorelemente;
Fig. 3     ein Flußdiagramm zur Erläuterung der Funktion einer Auswerteschaltung, die die Ausgangssignale gemäß Fig. 2 verarbeitet; und
Fig. 4     ein detaillierteres Flußdiagramm zur Erläuterung der Arbeitsweise der Auswerteschaltung.

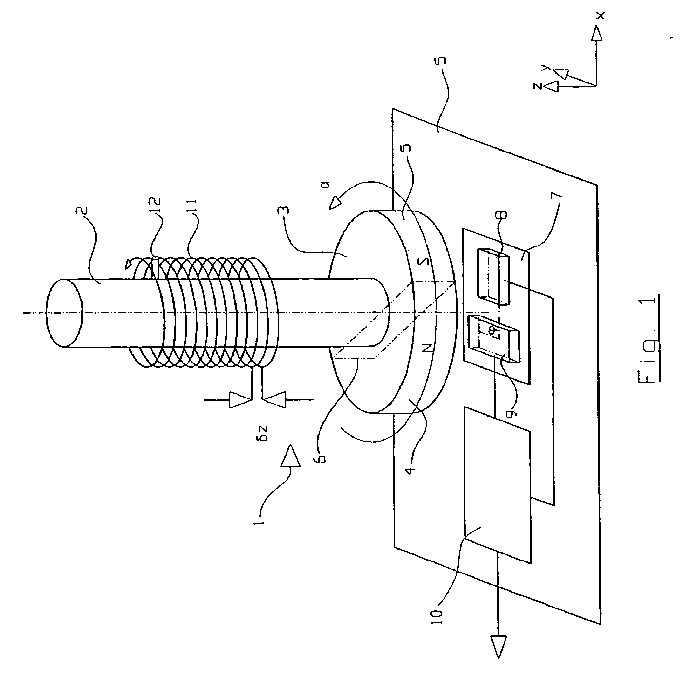

Der Drehwinkelsensor der Fig. 1 ist in seiner Gesamtheit mit dem Bezugszeichen 1 bezeichnet. An einer drehbaren Welle 2, deren Drehwinkel $\alpha$ gemessen werden soll, ist ein Magnet 3 befestigt, der einen Nordpol 4 und einen Südpol 5 aufweist, die durch eine fiktive Ebene 6, die parallel zur Drehachse der Welle 2 liegt, voneinander getrennt sind. Gegenüberliegend zu dem Magnet 3 ist eine Sensoreinheit 7 angeordnet, die zwei magnetfeldempfindliche Sensoren 8 und 9 enthält, deren Hauptempfindlichkeitsrichtungen senkrecht zueinander stehen und in einer senkrecht zur Mittelachse der Welle 2 liegenden Ebene (x-, y-Ebene) liegen. Es sei allerdings darauf hingewiesen, daß die beiden Sensoren 8 und 9 nicht in jedem Falle senkrecht zueinander stehen müssen, sondern auch in anderem Winkel $\varphi$ zueinander ausgerichtet sein können. Die Sensoren 7 und 8 können - wie dargestellt - nebeneinander in der xy-Ebene liegen, sie können aber auch übereinander angeordnet sein. Generell kann jede Art von Magnetfeldsensor verwendet werden, beispielsweise Hall-Sonden, Induktionsspulen oder ähnliches. Wird die Welle 2 und damit der Magnet 3 relativ zu den Sensoren 8 und 9 gedreht, so ändert sich die Flußdichte des Magnetfeldes bzw. die magnetische Feldstärke und die beiden Sensoren erzeugen in Abhängigkeit vom Drehwinkel $\alpha$ ein periodisches Ausgangssignal, das im Prinzip sinusförmig ist. Sind die beiden Sensoren 8 und 9 in xy-Ebene rechtwinklig zueinander ausgerichtet, so sind auch die beiden Ausgangssignale um 90° zueinander phasenverschoben, so daß der eine Sensor ein sinusförmiges und der andere ein kosinusförmiges Ausgangssignal liefert. Diese Ausgangssignale werden einer Auswerteeinrichtung 10 zugeführt, die in weiter unten beschriebener Weise die Signale auswertet.

Mit dem bisher beschriebenen Drehwinkelsensor können im Prinzip nur Winkel bis zu einer vollen Umdrehung, d.h. bis 360° gemessen werden.

Für die Erfassung eines größeren Winkelbereiches, der mehrere volle Umdrehungen beinhalten kann, ist vorgesehen, daß der vertikale Abstand in z-Richtung zwischen dem Magneten 3 und der Sensoreinheit 7 pro volle Umdrehung um einen Betrag $\delta z$ verändert wird.

Hierzu ist eine ortsfeste Führungsbahn 11 vorgesehen, die mit einem Führungsorgan 12 an der Welle 2 zusammenwirkt. Im einfachsten Fall können Führungsbahn 11 und Führungsorgan 12 Schraubgewinde mit konstanter Steigung sein, so daß der Magnet 3 proportional dem Drehwinkel $\alpha$ seinen Abstand zu der Sensoreinheit 7 verändert, wobei in diesem Fall die Änderung des Abstandes in z-Richtung pro voller Umdrehung dem Wert $\delta z$ entspricht. Die von den Sensoren 8 und 9 jeweils gemessene Feldstärke ändert sich in Abhängigkeit von dem Abstand in z-Richtung dann gemäß einer Funktion $1/z^2$.

Anstelle eines Gewindes für die Führungsbahn 11 und das Führungsorgan 12 können aber auch andere Führungen verwendet werden, wie z.B. eine Kulissenführung (11) mit einem Abtaststift (12). Die Steigung der Kulissenführung muß dann nicht konstant sein sondern lediglich einer monotonen Funktion gehorchen. Diese Funktion kann beispielsweise eine quadratische Funktion sein, mit der die quadratische Abhängigkeit der Sensorausgangssignale von dem Abstand in z-Richtung kompensiert werden kann.

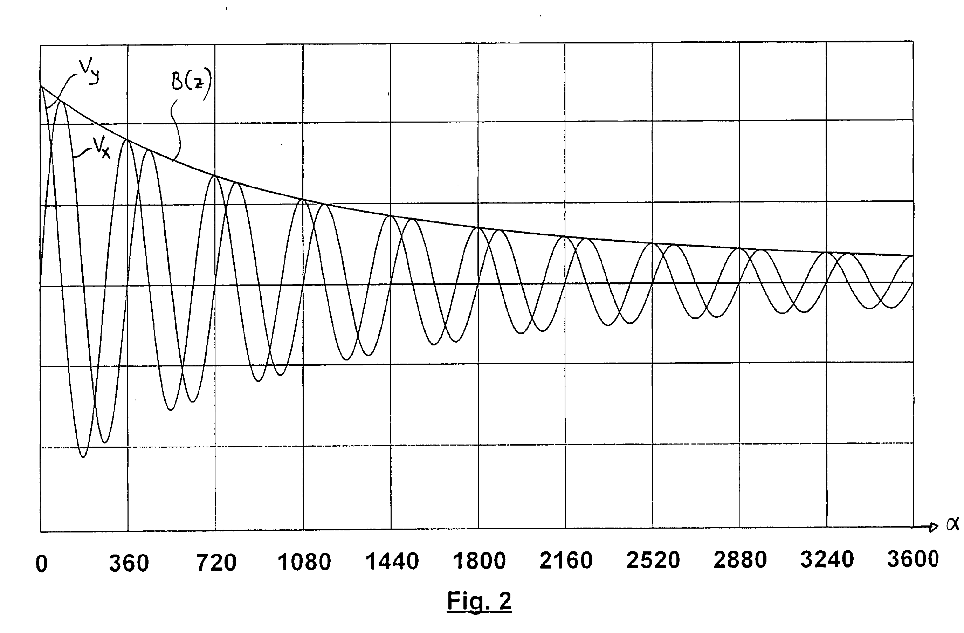

Fig. 2 zeigt die Abhängigkeit der Ausgangssignale $V_x$ und $V_y$ der Sensoren 7 und 8 in Abhängigkeit vom Drehwinkel $\alpha$, der im dargestellten Beispiel 3600°, also zehn volle Umdrehungen betragen kann. Die Kurve $V_x$ ist dabei ein sinusförmiges und die Kurve $V_y$ ein kosinusförmiges Signal, sofern die beiden Sensoren 7 und 8 in der xy-Ebene genau um 90° gegeneinander in Bezug auf ihre Vorzugsrichtung ausgerichtet sind. Wie schon erwähnt, können die Sensoren aber auch um einen anderen Winkel $\varphi$ versetzt sein, wobei die Signale $V_x$ und $V_y$ generell dann eine Phasenverschiebung um den Winkel $\varphi$ haben.

Mit der Kurve $B_z$ ist die Abhängigkeit der beiden Ausgangssignale $V_x$ und $V_y$ vom Abstand zwischen den Sensoren 8 und 9 und dem Magneten 3 dargestellt, die hier bei einer linearen Steigung der Zwangsführung 11, 12 gemäß einer quadratisch abfallenden Funktion ($1/z_2$) verläuft und als Einhüllende für die Signale $V_x$ und $V_y$ wirkt. Ent-

sprechend der Beziehung $\sin^2\alpha + \cos^2\alpha = 1$ läßt sich ein Signal entsprechend der Kurve $B_z$ ermitteln, aus dem der Winkel $\alpha$ bestimmbar ist. Da die Kurve $B_z$ bei größeren Winkelbereichen allerdings sehr flach verläuft, hätte man bei einer solchen Auswertung eine geringe Empfindlichkeit bzw. ein geringes Auflösungsvermögen. Daher wird die Kurve $B_z$ generell nur dazu verwendet zu bestimmen, in welcher vollen Umdrehung n sich der Drehwinkelsensor befindet, mit

$$n = 0 \text{ für } 0 \le \alpha \le 360°$$

$$n = 1 \text{ für } 360 < \alpha \le 720°$$

usw.

Innerhalb der einzelnen vollen Umdrehungen erfolgt dagegen eine Feinauswertung durch Auswertung sinus- und kosinusförmigen Signale $V_x$ und $V_y$.

Der Zusammenhang zwischen der magnetischen Feldstärke in Abhängigkeit vom Abstand z lautet in grober Näherung:

$$B(z) = \frac{B_0 * h^2}{(z + h)^2}$$

mit h = Kantenlänge des Magneten und $B_0$ = Flußdichte bei z = 0, d.h. 0mm Abstand.

Da die Sensoren nur die Flußdichtenkomponente in Richtung ihrer Empfindlichkeit registrieren, haben sie ein sinus- bzw. kosinusförmiges Ausgangssignal. Der Zusammenhang lautet:

$$V_x (\alpha; z) = B(z) * S_x * \cos(\alpha)$$

$$V_y (\alpha; z) = B(z) * S_y * \sin(\alpha)$$

mit $\alpha$ = Winkel zwischen Magnetfeld-Hauptrichtung und Empfindlichkeitsrichtung des y-Sensors; $S_x$; $S_y$ = Empfindlichkeit der Sensoren in x- bzw. y-Richtung. Die beiden Sensoren 8 und 9 messen folglich die x- bzw. y-Komponenten des Magnetfeldes und haben daher den in Fig. 2 in den Kurven $V_x$ und $V_y$ dargestellten Verlauf.

Geht man davon aus, daß die beiden Sensoren 8 und 9 jeweils die gleiche Empfindlichkeit aufweisen, so ergibt sich

$$|B(z)| = \frac{\sqrt{V_x^2 (\alpha; z) + V_y^2 (\alpha; z)}}{S_0}$$

und

$$\tan(\alpha) = \frac{V_y(\alpha; z)}{V_x(\alpha; z)}$$

woraus folgt:

$$\alpha = \arctan \left( \frac{V_y(\alpha;z)}{V_x(\alpha;z)} \right)$$

Für die Berechnung auf einem Mikrocontroller oder einem ASIC gibt es mehrere Realisierungsmöglichkeiten. Zum einen könnte man die Arcustangens-Funktion über eine Reihenentwicklung realisieren, was relativ zeitaufwendig ist; zum anderen kann man eine in einem Speicher hinterlegte Tabelle für die Arcustangens-Funktion verwenden, was einen hohen Speicherplatzbedarf zur Folge hat. Eine effizientere Methode ist, eine Koordinatentransformation durchzuführen, was beispielsweise unter Anwendung des bekannten CORDIC-Algorithmus (Coordinate Rotation Digital Computing) möglich ist. Dieser Algorithmus benötigt für eine geforderte Rechengenauigkeit immer gleich viele Schleifendurchläufe und verwendet nur Additionen und Schiebe-Operationen. Er ist auch hervorragend geeignet, um in reiner Hardware realisiert zu werden, was eine hohe Rechengeschwindigkeit zuläßt.

Aus der oben wiedergegebenen Arcustangens-Funktion erhält man ein Winkelsignal in einem Bereich von 0° bis 360°. Weiter hat man das Betragssignal von B (z) . Um daraus eine Information zu gewinnen, innerhalb welcher vollen Umdrehung sich der Drehwinkelsensor befindet, wäre es grundsätzlich möglich, das Signal B(z) durch eine Umkehrfunktion zu linearisieren und daraus die Umdrehungsnummer zu bestimmen. Dies erweist sich aber als rechenaufwendig wegen der Division und dem Wurzelziehen. Einfacher ist es, das Signal mit vorbestimmten, gespeicherten Werten zu vergleichen und daraus die Information zu gewinnen. Bevorzugt wird daher, eine Anzahl k von Stützstellen vorzusehen mit

$$k = (n * 2)+2$$

mit n = Anzahl der zu messenden Umdrehungen.

Um an den jeweiligen Sprungstellen von 360° auf 0° keine fehlerhafte Zuordnung zu bekommen, ist eine Rechenroutine nötig, die den aktuellen Winkel mit berücksichtigt. Eine solche Routine könnte wie folgt aussehen:

```
Rundenberechung mit Fehlererkennung

for (i=0;i<22;i++)
{
  if ((betrag>=stuetzstelle [i] && (winkel < 180))
  {
    i=(>>1);
    break;
  }
  else if ((betrag >= stuetzstelle [i] && (winkel >180))
  {
    i=(i>>1)-1;
    break;
  }
  i++;
  if betrag >= stuetzstelle [i])
  {
    i=(i-1)>>1;
    break;
  }
}
ENDE Rundenberechnung mit Fehlererkennung
```

Dabei ist der Wert, den die Variable "i" nach Abbruch der For-Schleife hat, die aktuelle Rundenzahl.
Die Stützstellen [i](i=0...21) sind die Beträge bei den Winkeln 90°, 270°, 450°, 360°...
Die Stützstellen müssen vor Inbetriebnahme des Sensors einmal gemessen und abgespeichert werden.

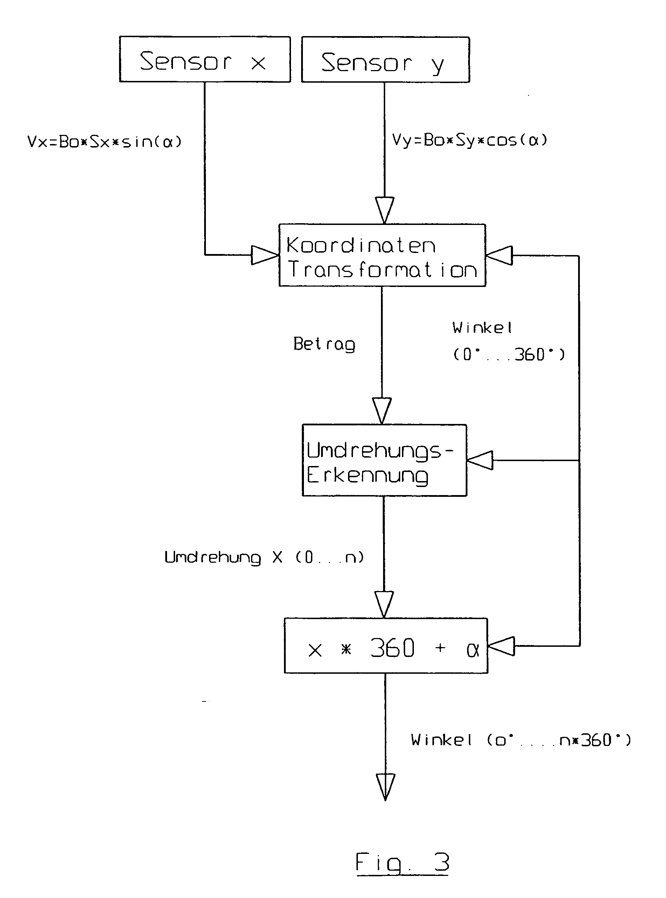

Fig. 3 zeigt ein Flußdiagramm für die oben geschilderten Berechnungen. Die beiden Sensoren 8 und 9, die hier als Sensor x und Sensor y bezeichnet werden, liefern die beiden Signale $V_x$ und $V_y$. Hieraus wird bevorzugt durch eine Koordinatentransformation der Winkel $\alpha$ im Bereich einer vollen Umdrehung, also nur im Bereich von 0° bis 360° ermittelt.

In einem weiteren Schritt wird anhand der obigen Funktion B(z) ermittelt, bei der wievielten Umdrehung x sich der Drehwinkelsensor befindet. In einem letzten Schritt wird dann die Anzahl der Umdrehung x mit 360° multipliziert und der Winkel $\alpha$, der nur im Bereich von 0° bis 360° liegt, hinzuaddiert.

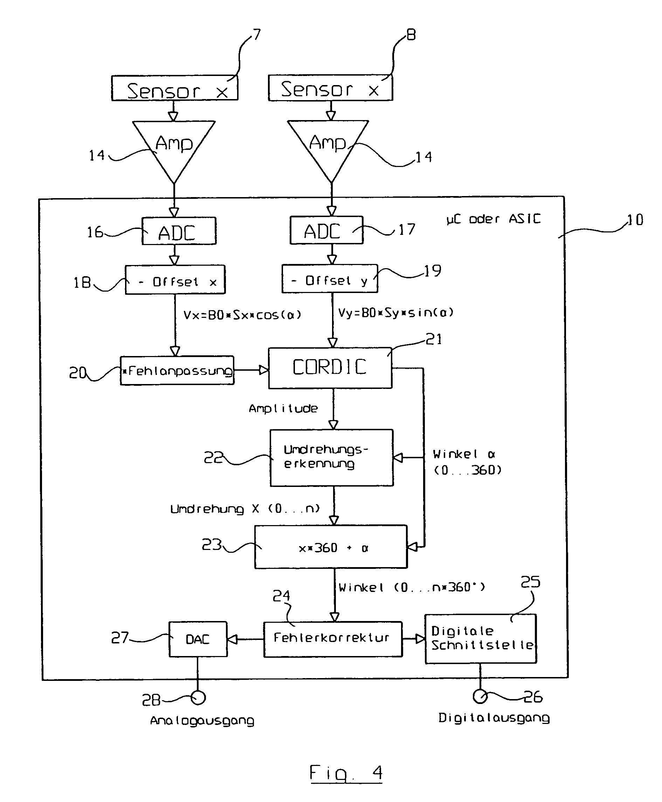

In Fig. 4 ist das Flußdiagramm der Fig. 3 etwas detaillierter dargestellt. Die Ausgangssignale der Sensoren 7 und 8 werden zunächst Analogverstärkern 14 und 15 zugeführt und dann in Analog-/Digital-Wandlern 16 und 17 digitalisiert. Sodann werden eventuelle Offset-Fehler in Rechenbausteinen 18 und 19 korrigiert und eines der Ausgangssignale $V_x$ oder $V_y$ noch hinsichtlich einer eventuellen Fehlanpassung (20) korrigiert. Sodann erfolgt die Koordinatentransformation vorzugsweise nach dem oben beschriebenen CORDIC-Verfahren (Block 21) und dann, wie im Zusammenhang mit Fig. 3 beschrieben, die Umdrehungserkennung (Block 22) und die Addition der Umdrehungszahl x multipliziert mit dem Winkel 360° zu dem von dem CORDIC-Block 21 ausgegebenen Feinwinkel (Block 23).

Anschließend kann noch eine Fehlerkorrektur vorgenommen werden. Hierzu können bei erstmaliger Eichung des Drehwinkelsensors zu einzelnen Winkeln Fehlerwerte gemessen und gespeichert werden, die dann in der Fehlerkorrektur (Block 24) berichtigt werden. Das endgültige Ausgangssignal kann dann entweder über eine digitale Schnittstelle 25, einem Digitalausgang 26 oder über einen Digital-Analog-Wandler 27 an einen Analogausgang 28 ausgegeben werden.

Sofern die beiden Sensoren 7 und 8 mit ihrer Vorzugsrichtung nicht senkrecht zueinander ausgerichtet sind sondern um einen von 90° verschiedenen Winkel $\varphi$, so hat das eine Signal die Form sin $(\alpha)$ und das andere sin$(\alpha+\varphi)$. Das Kosinussignal läßt sich dann wie folgt ermitteln:

$$\cos(\alpha) \; = \; \frac{\sin(\alpha + \varphi)}{\sin(\varphi)} \; - \; \frac{\sin(\alpha)}{\tan(\varphi)}$$

Mit diesen Signalen kann dann in gleicher Weise wie oben beschrieben die weitere Verarbeitung durchgeführt werden.

Aus obigem läßt sich auch ersehen, daß der Betrag B(z) relativ ungenau sein kann. Lediglich die Werte an den oben genannten Stützstellen müssen noch eindeutig voneinander unterscheidbar sein. In dem oben beschriebenen Algorithmus wird sukzessive von oben oder von unten (betragsmäßig) abgefragt, zwischen welchen zwei benachbarten Stützstellen dieser Betrag liegt, womit dann eindeutig die Umdrehungszahl ermittelbar ist.

Sofern die Steigung der Zwangsführung 11, 12 nichtlinear ist sondern beispielsweise nach einer quadratischen Funktion, so läßt sich die Funktion B(z) auch linearisieren, womit die Auswertung vereinfacht ist. Auch bei linearer Funktion von B(z) kann man mit dem oben beschriebenen Stützstellenverfahren arbeiten. Andererseits kann auch der ganzzahlige Teil einer Division durch 360° verwendet werden, um den ganzzahligen Wert der Umdrehungen zu bestimmen.

**Patentansprüche**

1. Drehwinkelsensor mit einer drehbaren Welle, einem mit der drehbaren Welle gekoppelten Magneten und einem magnetempfindlichen Sensorelement, das in Abhängigkeit vom relativen Drehwinkel zwischen dem Magneten und dem Sensor ein sinusförmiges und ein kosinusförmiges Ausgangssignal erzeugt, und mit einer Auswerteeinheit, die aus den Ausgangssignalen ein dem Drehwinkel entsprechendes Signal erzeugt,

   **dadurch gekennzeichnet,**

   **daß** die welle (2) längs einer Führungsbahn (11) bei ihrer Drehung um ihre Achse zusätzlich linear parallel zu ihrer Achse verschieblich geführt ist, so daß sich der Abstand zwischen Magnet (3) und Sensor (7) entsprechend einer Steigung der Führungsbahn (11) verändert, und

   **daß** die Auswerteeinheit (10) aus Ausgangssignalen ($V_x$, $V_y$) des Sensorelementes (7) ein Signal (B(z)) ermittelt, aus welchem der Abstand (z) zwischen dem Sensorelement (7) und dem Magneten (4) und damit die Anzahl (n) der vollen Umdrehungen der Welle (2) ermittelbar ist, wobei aus den sinusförmigen und kosinusförmigen Ausgangssignalen ($V_x$, $V_y$) ein Feinsignal innerhalb einer vollen Umdrehung ermittelt wird und dieses Feinsignal zu dem Wert der vollen Umdrehung (n) multipliziert mit 360° hinzuaddiert wird.

**2.** Drehwinkelsensor nach Anspruch 1, **dadurch gekennzeichnet,**
**daß** die Führungsbahn (11) ein Gewinde mit konstanter Steigung ist.

**3.** Drehwinkelsensor nach Anspruch 1, **dadurch gekennzeichnet,**
**daß** die Führungsbahn eine Kulissenführung (11) ist, die über einen Führungsstift (12) mit der Welle (2) gekoppelt ist.

**4.** Drehwinkelsensor nach Anspruch 3, **dadurch gekennzeichnet,**
**daß** die Führungsbahn stetig monoton, jedoch nicht linear ist und vorzugsweise nach einer quadratischen Funktion $F(z) = 1/z^2$ verläuft.

**5.** Drehwinkelsensor nach einem der Ansprüche 1 bis 4, **dadurch gekennzeichnet,**
**daß** das Feinsignal innerhalb eines Meßbereiches von 0° bis 360° durch eine Koordinatentransformation nach einem CORDIC-Algorithmus durchgeführt wird.

**6.** Drehwinkelsensor nach einem der Ansprüche 1 bis 5, **dadurch gekennzeichnet,**
**daß** die Auswerteeinheit (10) einen Speicher aufweist, in welchem Werte von Stützstellen hinterlegt sind, und daß zur Ermittlung der Anzahl von Umdrehungen (n) ermittelt wird, zwischen welchen zwei benachbarten Werten von Stützstellen der aktuelle Wert der gemessenen Feldstärke (B(z)) liegt.

**Claims**

**1.** Angle of rotation sensor with a rotary shaft, a magnet coupled to the rotary shaft, and a magnetically sensitive sensor element, which generates a sinusoidal output signal and a cosinusoidal output signal as a function of the relative angle of rotation between the magnet and the sensor, and with an evaluation unit, which generates from the output signals a signal corresponding to the angle of rotation, **characterized in that** the shaft (2) is additionally moved linearly to its axis along a guide track (11) when the shaft rotates about its axis, so that the distance between magnet (3) and sensor (7) changes corresponding to a pitch of the guide track (11),
and the evaluation unit (10) determines from output signals ($V_x$, $V_y$) of the sensor element (7) a signal (B(z)), from which the distance (z) between the sensor element (7) and the magnet (4) and the number (n) of full rotations of the shaft (2), can be determined, wherein from the sinusoidal and consinusoidal output signals ($V_x$, $V_y$) a fine signal within a full rotation is determined and this fine signal is added to the full rotation value (n) multiplied by 360°.

**2.** Angle of rotation sensor according to Claim 1, **characterized in that** the guide track (11) comprises threads with constant pitch.

**3.** Angle of rotation sensor according to Claim 1, **characterized in that** the guide track is a sliding block guide (11), which is coupled by means of a tracing pin (12) to the shaft (2).

**4.** Angle of rotation sensor according to Claim 3, **characterized in that** the guide track is continuous and monotonic, but not linear, and preferably follows a quadratic function $F(z) = 1/z^2$.

**5.** Angle of rotation sensor according to one of Claims 1-4, **characterized in that** the fine signal is performed within a measurement range from 0° to 360° by a coordinate transformation according to a CORDIC algorithm.

**6.** Angle of rotation sensor according to one of Claims 1-5, **characterized in that** the evaluation unit (10) has a memory, in which values of support points are stored, and **in that** for determining the number (n) of rotations, it is determined which tow successive values of support points surround the actual value of the measured field strength (B(z)).

**Revendications**

**1.** Capteur d'angle de rotation comprenant un arbre rotatif, un aimant couplé à l'arbre rotatif et un élément de capteur sensible à un aimant, lequel élément de capteur produit un signal de sortie sinusoïdal et un signal de sortie cosinusoïdal en fonction de l'angle de rotation relatif entre l'aimant et le capteur, et une unité d'exploitation qui produit un signal correspondant à l'angle de rotation à partir des signaux de sortie,
**caractérisé en ce**
**que** l'arbre (2) se déplace linéairement, parallèlement à son axe de manière coulissante le long d'un chemin de guidage (11) lors de sa rotation autour de son axe, de sorte que l'espacement entre l'aimant (3) et le capteur (7) varie en suivant une inclinaison du chemin de guidage (11), et

en ce que l'unité d'exploitation (10) détermine à partir de signaux de sortie ($V_x$, $V_y$) de l'élément de capteur (7) un signal (B(z)) à partir duquel l'espacement (z) entre l'élément de capteur (7) et l'aimant (4) et ainsi le nombre (n) de tours complets de l'arbre (2) peut être déterminé, de sorte qu'un signal précis est déterminé à partir des signaux de sortie ($V_x$, $V_y$) sinusoïdaux et cosinusoïdaux dans l'intervalle d'un tour complet et ce signal précis est additionné au nombre de tours complets (n) multiplié par 360°.

**2.** Capteur d'angle de rotation selon la revendication 1, **caractérisé en ce que** le chemin de guidage (11) est un filetage ayant une inclinaison constante.

**3.** Capteur d'angle de rotation selon la revendication 1, **caractérisé en ce que** le chemin de guidage est un guide de coulisse (11), lequel est couplé à l'arbre (2) par le biais d'une goupille de guidage (12).

**4.** Capteur d'angle de rotation selon la revendication 3, **caractérisé en ce que** le chemin de guidage est continu de manière monotone, toutefois non linéaire et suit de préférence une fonction quadratique $F(z) = 1/z^2$.

**5.** Capteur d'angle de rotation selon l'une quelconque des revendications 1 à 4, **caractérisé en ce que** le signal précis à l'intérieur d'une zone de mesure de 0° à 360° est exécuté par une transformation de coordonnées selon un algorithme CORDIC.

**6.** Capteur d'angle de rotation selon l'une quelconque des revendications 1 à 5, **caractérisé en ce que** l'unité d'exploitation (10) comprend une mémoire, dans laquelle des valeurs de positions d'appui sont enregistrées, et en ce que, pour déterminer le nombre de tours (n), on détermine entre quelles deux valeurs voisines des positions d'appui se trouve la valeur actuelle de l'intensité de champ (B(z)) mesurée.

EP 1 503 182 B1

Fig. 1

Fig. 2

10

Sensor x | Sensor y

$Vx=Bo*Sx*sin(\alpha)$     $Vy=Bo*Sy*cos(\alpha)$

Koordinaten
Transformation

Betrag     Winkel
(0°...360°)

Umdrehungs-
Erkennung

Umdrehung X (0...n)

x * 360 + $\alpha$

Winkel (o°....n*360°)

Fig. 3

Vx=B0*Sx*cos(α)  Vy=B0*Sy*sin(α)

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19747753 C1
- DE 19539134 A1
- DE 4422868 A1
- DE 4100666 A1
- DE 4301704 A1
- DE 19506938 A1
- DE 19739823 A1
- DE 19962241 A1
- EP 0386334 B1
- DE 10140710 A1
- DE 19813569 A1
- DE 29914310 U1
- DE 4437939 C2
- AT 004639 U1
- DE 3935261 A1
- JP 11211456 A
- JP 61283801 A
- DE 3703591 C2
- US 6411082 B2